# EUROPÄISCHE PATENTANMELDUNG

(11) **EP 3 136 017 A1**
(43) Veröffentlichungstag der Anmeldung: **01.03.2017**
(21) Anmeldenummer: 16184939.3
(22) Anmeldetag: 19.08.2016
(51) Int. Cl.: F24J 2/05, F24J 2/32, F24J 2/46, F28D 15/02

(54) **SOLARKOLLEKTOR**

(30) Priorität: 25.08.2015 DE 102015114099
(71) Anmelder: Viessmann Werke GmbH & Co. KG, 35108 Allendorf (DE)
(72) Erfinder: Charles, Pierre, 57365 Flévy (FR); Delesse, Vivian, 57800 Betting (FR); Hartenstein, Laurent, 57320 Remelfang (FR); Kaczmarek, Fabrice, 57910 Hambach (FR)
(74) Vertreter: Wolf, Michael

(57) **Zusammenfassung**

Die Erfindung betrifft einen Solarkollektor, umfassend ein ein Arbeitsmedium aufnehmendes Wärmerohr (1), dessen eines Ende als mit einem von einem Wärmeträgermedium durchströmten Wärmetauscher verbundener Kondensator (3) und dessen anderes Ende als in einem für Sonnenstrahlung durchlässigen Rohr (4) angeordneter Verdampfer (5) ausgebildet ist, wobei der Verdampfer (5) Wärme der Sonnenstrahlung auf das Arbeitsmedium übertragend und der Kondensator (3) Wärme vom Arbeitsmedium an den Wärmetauscher (2) abgebend ausgebildet ist. Nach der Erfindung ist vorgesehen, dass der Verdampfer (5) einen ersten, kondensatorzugewandten und einen zweiten, kondensatorabgewandten Sammelraum (5.1, 5.2) für das Arbeitsmedium aufweist, wobei in diese Sammelräume (5.1, 5.2) eine Vielzahl von parallel zueinander verlaufenden Verbindungsrohrleitungen (5.3) ausmündend ausgebildet ist.

## Beschreibung

Die Erfindung betrifft einen Solarkollektor gemäß dem Oberbegriff des Patentanspruchs 1.

Ein thermisch arbeitender Solarkollektor der eingangs genannten Art wird von der Anmelderin unter der Produktbezeichnung VITOSOL 200-T hergestellt und vertrieben (siehe hierzu auch das den Anmeldungsunterlagen beigefügte Datenblatt zu diesem Produkt). Ein solcher Solarkollektor besteht aus einem ein Arbeitsmedium aufnehmenden Wärmerohr (auch Heatpipe genannt), dessen eines oberes Ende als mit einem von einem Wärmeträgermedium durchströmten Wärmetauscher verbundener Kondensator und dessen anderes unteres Ende als in einem für Sonnenstrahlung durchlässigen Rohr, insbesondere in einer evakuierten Glasröhre, angeordneter Verdampfer ausgebildet ist, wobei der Verdampfer als Absorber Wärme der Sonnenstrahlung auf das Arbeitmedium übertragend und der Kondensator Wärme vom verdampften Arbeitsmedium an den Wärmetauscher abgebend und dabei kondensierend ausgebildet ist. Dieser Solarkollektor hat sich an sich bestens bewährt.

Die Formulierung, dass das Wärmerohr aus zwei Enden besteht, bedeutet dabei hier und im Folgenden, dass das Wärmerohr insbesondere einerseits aus dem Kondensator und andererseits aus dem Verdampfer besteht, d. h. abgesehen von einer eventuell vorgesehenen Verbindungsleitung zwischen dem Kondensator und dem Verdampfer wird die Länge des Wärmerohrs im Grunde durch die Länge dieser beiden Bauteile bestimmt.

Der Erfindung liegt die Aufgabe zugrunde, einen thermischen Solarkollektor der eingangs genannten Art weiter zu verbessern. Insbesondere soll ein Solarkollektor mit einer noch höheren Wärmeleistung geschaffen werden.

Diese Aufgabe ist mit einem Solarkollektor der eingangs genannten Art durch die im Kennzeichen des Patentanspruchs 1 aufgeführten Merkmale gelöst.

Nach der Erfindung ist also vorgesehen, dass der Verdampfer einen ersten, kondensatorzugewandten und einen zweiten, kondensatorabgewandten Sammelraum für das Arbeitsmedium aufweist, wobei in diese Sammelräume eine Vielzahl von parallel zueinander verlaufenden Verbindungsrohrleitungen ausmündend ausgebildet ist.

Mit anderen Worten zeichnet sich der erfindungsgemäße Solarkollektor somit dadurch aus, dass der Verdampfer bzw. Absorber nicht mehr aus einem Absorberblech mit einer einzigen daran angebrachten Rohrleitung zum Kondensator, sondern aus den beiden Sammelräumen und dazwischen aus einer Reihe nebeneinander angeordneter Verbindungsrohrleitungen gebildet ist. Vom Kondensator kommendes, verflüssigtes Arbeitsmedium strömt somit schwerkraftbedingt bei der erfindungsgemäßen Lösung über den kondensatorseitigen Sammelraum in die Verbindungsrohrleitungen und von dort in den kondensatorabgewandten Sammelraum, der eine Art Sumpf für das flüssige Arbeitmedium bildet. Von dort aus verteilt sich dieses gleichmäßig auf alle Verbindungsrohrleitungen, um dort bei eingehender Sonnenstrahlung und entsprechender Wärmeaufnahme zu verdampfen. Der Dampf gelangt dann über den kondensatorseitigen Sammelraum zum Kondensator, um dort schließlich unter Wärmeabgabe zu kondensieren.

Wie ersichtlich, besteht die Besonderheit der erfindungsgemäßen Lösung somit insbesondere darin, dass jede Verbindungsrohrleitung direkt sonnenbestrahlt ausgebildet ist. Ein wie beim eingangs erläuterten Stand der Technik vorgesehenes Absorberblech und die damit verbundene Notwendigkeit einer Wärmeübertragung auf die einzige dort vorgesehene Rohrleitung zum Kondensator kann somit entfallen.

Andere vorteilhafte Weiterbildungen des erfindungsgemäßen Solarkollektors ergeben sich aus den abhängigen Patentansprüchen.

Der Vollständigkeit halber wird noch auf das Patentdokument DE 10 2009 030 356 A1 hingewiesen, aus dem ein Zwei-Phasen-Thermosiphon bekannt ist. Hier ist zwar auch ein so genanntes Sandwichelement zur Ausbildung von Verbindungsrohrleitung offenbart, es fehlt aber vollständig der Ansatz, dieses Sandwichelement in einen außerhalb mit dem Kondensator versehenen Glaskolben zu integrieren.

Der erfindungsgemäße Solarkollektor einschließlich seiner vorteilhaften Weiterbildungen gemäß der abhängigen Patentansprüche wird nachfolgend anhand der zeichnerischen Darstellung eines bevorzugten Ausführungsbeispiels näher erläutert.

Es zeigt
- Figur 1: perspektivisch einen vollständigen erfindungsgemäßen Solarkollektor;
- Figur 2: perspektivisch und teilweise geschnitten einen Teil des erfindungsgemäßen Solarkollektors gemäß Figur 1 mit einer ersten Ausführungsform der Verbindungsrohrleitungen;
- Figur 3: im Schnitt eine zweite Ausführungsform der Verbindungsrohrleitungen;
- Figur 4: im Schnitt eine dritte Ausführungsform der Verbindungsrohrleitung;
- Figur 5: perspektivisch vergrößert den oberen Teil des Solarkollektors gemäß Figur 1;
- Figur 6: perspektivisch vergrößert den unteren Teil des Solarkollektors gemäß Figur 1; und
- Figur 7: schematisch als Explosionsdarstellung den aus dem Stand der Technik bekannten Wärmetauscher mit einem Kondensator des erfindungsgemäßen Solarkollektors.

Der in den Figuren dargestellte Solarkollektor besteht zunächst in bekannter Weise aus einem ein Arbeitsmedium (insbesondere ein auf Glykol basierendes Arbeitsmedium, besonders bevorzugt ein Arbeitsmedium auf Basis von Propylenglykol wie zum Beispiel das Produkt mit dem Markennamen Tyfocor® LS) aufnehmendes Wärmerohr 1, dessen eines oberes Ende als mit einem von einem Wärmeträgermedium (zum Schutz vor Frost insbesondere ein Gemisch aus Wasser und Glykol) durchströmten Wärmetauscher 2 verbundener Kondensator 3 und dessen anderes unteres Ende als in einem für Sonnenstrahlung durchlässigen Rohr 4 angeordneter Verdampfer 5 ausgebildet ist, wobei der Verdampfer 5 Wärme der Sonnenstrahlung auf das Arbeitsmedium übertragend und der Kondensator 3 Wärme vom Arbeitsmedium an den Wärmetauscher 2 abgebend ausgebildet ist. Die gewählte räumliche Anordnung des Solarkollektors sorgt dabei in bekannter Weise schwerkraftbedingt für einen so genannten "Naturumlauf" des Arbeitsmediums.

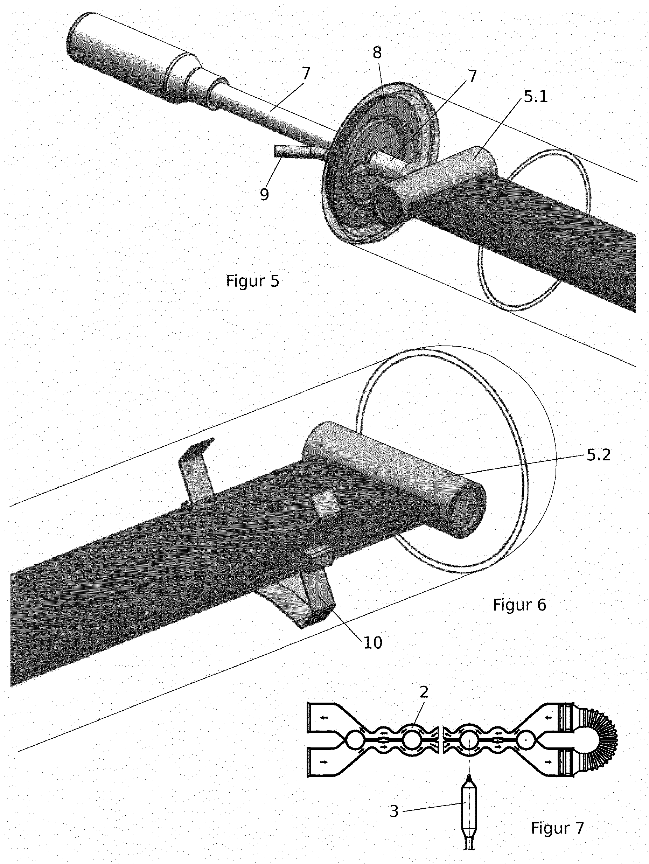

Mit Verweis auf Figur 7 ist darüber hinaus in an sich bekannter Weise (siehe hierzu das Patentdokument DE 44 44 733 A1) vorgesehen, dass der in den übrigen Figuren nicht extra dargestellte Wärmetauscher 2 als den Kondensator 3 beidseitig umschließender Doppelrohr-Wärmetauscher ausgebildet ist.

Wesentlich für alle Ausführungsformen des erfindungsgemäßen Solarkollektors ist nun, dass der Verdampfer 5 einen ersten, kondensatorzugewandten und einen zweiten, kondensatorabgewandten Sammelraum 5.1, 5.2 für das Arbeitsmedium aufweist, wobei in diese Sammelräume 5.1, 5.2 eine Vielzahl von parallel zueinander verlaufenden Verbindungsrohrleitungen 5.3 ausmündend ausgebildet ist.

Dabei ist weiterhin besonders bevorzugt vorgesehen, dass mindestens zwei, vorzugsweise und wie dargestellt alle Verbindungsrohrleitungen 5.3 als einstückiges Bauteil ausgebildet sind.

Noch etwas genauer betrachtet, ist vorgesehen, dass eine Wandung einer Verbindungsrohrleitung 5.3 gleichzeitig eine Wandung einer benachbarten Verbindungsrohrleitung 5.3 bildet. Dies kann dabei insbesondere dadurch praktisch umgesetzt werden, dass das Bauteil, das besonders bevorzugt aus Aluminium besteht, als im Strangpressverfahren hergestelltes Bauteil ausgebildet ist. Bezüglich dieses Herstellungsverfahrens wird auf folgenden Artikel verwiesen: https://de.wikipedia.org/w/ index.php?title=Strangpressen&oldid=133260606.

Weiterhin ist bevorzugt vorgesehen, dass die Verbindungsrohrleitung 5.3 einen einen Kapillareffekt (siehe hierzu auch https://de.wikipedia.org/w/index.php?title=Kapillarit%C3%A4t&oldid=155820788) bewirkenden Rohrleitungsquerschnitt aufweist, d. h. der Querschnitt ist bewusst so klein gewählt, dass das Wärmeträgermedium auch entgegen der Schwerkraft im Verdampfer 5 aufsteigen kann. Dies bedeutet genauer, dass der Querschnitt bevorzugt, unter Beachtung des Neigungswinkels des Solarkollektors bei seiner Installation, so ausgebildet ist, dass die Steighöhe des Arbeitsmediums in der Verbindungsrohrleitung 5.3 so hoch ist, dass mindestens der Höhenunterschied zwischen zwei Längsenden der Verbindungsrohrleitung 5.3 vom Arbeitsmedium überbrückt werden kann.

Weiterhin ist besonders bevorzugt vorgesehen, dass das Bauteil einen flach-rechteckigen und horizontal ausgerichteten Querschnitt aufweist, wobei eine Breite des Bauteils einem Vielfache seiner Höhe entspricht. Außerdem sind auch die beiden Sammelräume 5.1, 5.2 horizontal ausgerichtet angeordnet. Die genannte horizontale Anordnung ist dabei vorgesehen, um zu gewährleisten, dass sich das Arbeitsmedium gleichmäßig über die gesamte Breite des Verdampfers 5 verteilt.

Weiterhin ist das oben genannte Bauteil (mit seiner sonnenzugewandten Seite) mit einer vorzugsweise selektiv wirkenden, an sich bekannten Absorberbeschichtung versehen. Diesbezüglich wird der Einfachheit halber auf den Artikel unter https://de.wikipedia.org/w/index.php?title=Sonnenkollektor&oldid=139375835 verwiesen: "Um eine möglichst hohe Absorption der Sonnenenergie zu erreichen, ist die der Sonne zugewandte Oberfläche des Absorbers entweder schwarz eingefärbt oder mit einer speziellen Beschichtung versehen, die selektiv wirkt, das heißt, die von außen kommende kürzerwellige Sonnenenergie möglichst gut aufnimmt und die längerwellige Wärmeenergie des Absorbers nur schlecht abgibt".

Bezüglich des Verdampfers 5 ist darüber hinaus, wie in den Figuren dargestellt, vorgesehen, dass wahlweise der erste und/oder zweite Sammelraum 5.1, 5.2 als beidendig (zum Beispiel mit entsprechend passenden Rohrstopfen) verschlossener Rohrabschnitt ausgebildet ist/sind. Eine solche Ausführungsform ist dabei fertigungstechnisch vergleichsweise einfach herzustellen, wobei darüber hinaus vorgesehen ist, dass der Rohrabschnitt eine schlitzförmige Ausnehmung 6 zur abgedichten Aufnahme der Verbindungsrohrleitungen 5.3, die übrigens typischer Weise als geradlinige Verbindung zwischen den beiden Sammelräumen 5.1, 5.2 ausgebildet sind, aufweist, d. h. das die Verbindungsrohrleitungen 5.3 umfassende Bauteil kann bei der Herstellung des Solarkollektors am Stück in die schlitzförmige Ausnehmung 6 eingeschoben und dann dort beispielsweise stoffschlüssig (zum Beispiel durch Schweißen oder dergleichen) angebunden werden.

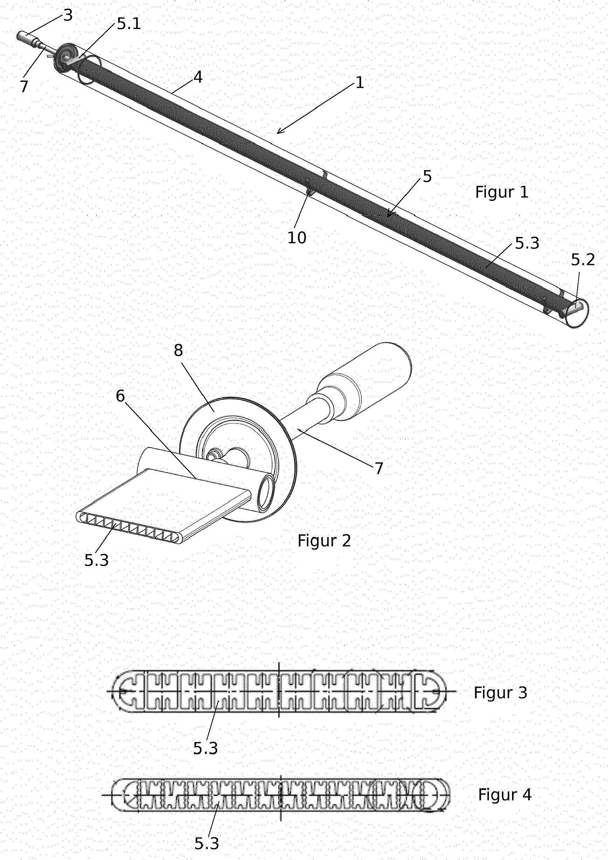

Wie besonders gut aus den Figuren 2 und 5 ersichtlich, ist ferner bevorzugt vorgesehen, dass auf einer Seite des ersten Sammelraums 5.1 die Verbindungsrohrleitungen 5.3 und auf einer gegenüberliegenden Seite des ersten Sammelraums 5.1 eine zum Kondensator 3 führende Rohrleitung 7 für das Arbeitsmedium angeordnet ist. Oder nochmals in anderen Worten: Zwischen dem Kondensator 3 und dem kondensatorzugewandten Sammelraum 5.1 ist eine Rohrleitung 7 für das Arbeitsmedium angeordnet. Dabei ist weiterhin bevorzugt vorgesehen, dass der Kondensator 3 einen zylindrischen Querschnitt und vorzugsweise einen größeren Durchmesser als die Rohrleitung 7 aufweist. Außerdem ist vorgesehen, dass die Hauptachse des oben genannten Rohrabschnitts (Sammelraum 5.1, 5.2) senkrecht zur Hauptachse der Rohres 4 und/oder der Rohrleitung 7 orientiert ausgebildet ist.

Weiterhin ist zunächst in an sich bekannter Weise vorgesehen, dass das den Verdampfer 5 aufnehmende Rohr 4, das vorzugsweise, wie erwähnt, als evakuierter Glaskolben ausgebildet ist, an seinem kondensatorseitigen Ende mit einem vorzugsweise metallisch ausgebildeten Verschlusselement 8 verschlossen ausgebildet ist. Dabei ist erfindungsgemäß die den kondensatorzugewandten Sammelraum 5.1 mit dem Kondensator 3 verbindende Rohrleitung 7 das Verschlusselement 8 abgedichtet durchgreifend ausgebildet. Außerdem ist in bekannter Weise vorgesehen, dass das Verschlusselement 8 stoffschlüssig (insbesondere durch Verschmelzen) mit dem gläsernen Rohr 4 verbunden ausgebildet ist. Zur Erzeugung des für die Wärmedämmung besonders günstigen Vakuums im Rohr 4 ist weiterhin am Verschlusselement 8 ein Evakuierungsanschluss 9 vorgesehen, der nach dem Evakuieren (zum Beispiel durch Zuschweißen oder dergleichen) verschlossen wird.

Schließlich ist noch vorgesehen, dass zwischen dem den Verdampfer 5 aufnehmenden Rohr 4 und den Verbindungsrohrleitungen 5.3 mindestens ein (dargestellt sind zwei) vorzugsweise elastisch ausgebildetes Fixierelement 10 (zum Beispiel eine den Verdampfer 5 im Rohr 4 zentrierende Klammer) angeordnet ist.

### Bezugszeichenliste

- 1: Wärmerohr
- 2: Wärmetauscher
- 3: Kondensator
- 4: Rohr
- 5: Verdampfer
- 5.1: erster Sammelraum
- 5.2: zweiter Sammelraum
- 5.3: Verbindungsrohrleitung
- 6: Ausnehmung
- 7: Rohrleitung
- 8: Verschlusselement
- 9: Evakuierungsanschluss
- 10: Fixierelement

## Patentansprüche

1. Solarkollektor, umfassend ein ein Arbeitsmedium aufnehmendes Wärmerohr (1), dessen eines Ende als mit einem von einem Wärmeträgermedium durchströmten Wärmetauscher (2) verbundener Kondensator (3) und dessen anderes Ende als in einem für Sonnenstrahlung durchlässigen Rohr (4) angeordneter Verdampfer (5) ausgebildet ist, wobei der Verdampfer (5) Wärme der Sonnenstrahlung auf das Arbeitsmedium übertragend und der Kondensator (3) Wärme vom Arbeitsmedium an den Wärmetauscher (2) abgebend ausgebildet ist,
**dadurch gekennzeichnet,**
**dass** der Verdampfer (5) einen ersten, kondensatorzugewandten und einen zweiten, kondensatorabgewandten Sammelraum (5.1, 5.2) für das Arbeitsmedium aufweist, wobei in diese Sammelräume (5.1, 5.2) eine Vielzahl von parallel zueinander verlaufenden Verbindungsrohrleitungen (5.3) ausmündend ausgebildet ist.

2. Solarkollektor nach Anspruch 1,
**dadurch gekennzeichnet,**
**dass** mindestens zwei, vorzugsweise alle Verbindungsrohrleitungen (5.3) als einstückiges Bauteil ausgebildet sind.

3. Solarkollektor nach Anspruch 2,
**dadurch gekennzeichnet,**
**dass** das Bauteil als im Strangpressverfahren hergestelltes Bauteil ausgebildet ist.

4. Solarkollektor nach Anspruch 2 oder 3,
**dadurch gekennzeichnet,**
**dass** das Bauteil einen flach-rechteckigen und horizontal ausgerichteten Querschnitt aufweist.

5. Solarkollektor nach einem der Ansprüche 1 bis 4,
**dadurch gekennzeichnet,**
**dass** eine Wandung einer Verbindungsrohrleitung (5.3) gleichzeitig eine Wandung einer benachbarten Verbindungsrohrleitung (5.3) bildet.

6. Solarkollektor nach einem der Ansprüche 1 bis 5,
**dadurch gekennzeichnet,**
**dass** wahlweise der erste und/oder zweite Sammelraum (5.1, 5.2) als beidendig verschlossener Rohrabschnitt ausgebildet ist/sind.

7. Solarkollektor nach Anspruch 6,
**dadurch gekennzeichnet,**
**dass** der Rohrabschnitt eine schlitzförmige Ausnehmung (6) zur abgedichten Aufnahme der Verbindungsrohrleitungen (5.3) aufweist.

8. Solarkollektor nach einem der Ansprüche 1 bis 7,
**dadurch gekennzeichnet,**
**dass** auf einer Seite des ersten Sammelraums (5.1) die Verbindungsrohrleitungen (5.3) und auf einer gegenüberliegenden Seite des ersten Sammelraums (5.1) eine zum Kondensator (3) führende Rohrleitung (7) für das Arbeitsmedium angeordnet ist.

9. Solarkollektor nach Anspruch 1 bis 7,
**dadurch gekennzeichnet,**
**dass** zwischen dem Kondensator (3) und dem kondensatorzugewandten Sammelraum (5.1) eine Rohrleitung (7) für das Arbeitsmedium angeordnet ist.

10. Solarkollektor nach Anspruch 8 oder 9, wobei das den Verdampfer (5) aufnehmende Rohr (4) an seinem kondensatorseitigen Ende mit einem Verschlusselement (8) verschlossen ausgebildet ist,
**dadurch gekennzeichnet,**
**dass** die den kondensatorzugewandten Sammelraum (5.1) mit dem Kondensator (3) verbindende Rohrleitung (7) das Verschlusselement (8) abgedichtet durchgreifend ausgebildet ist.
